# EUROPÄISCHE PATENTSCHRIFT

(11) **EP 0 879 025 B1**
(45) Veröffentlichungstag und Bekanntmachung des Hinweises auf die Patenterteilung: **29.09.1999**
(21) Anmeldenummer: 97900924.8
(22) Anmeldetag: 31.01.1997
(51) Int. Cl.: A61C 9/00

(54) **ABDRUCKSYSTEM FÜR IMPLANTATE MIT EINER ABDRUCKKAPPE**
IMPRESSION SYSTEM FOR IMPLANTS WITH AN IMPRESSION CAP
SYSTEME D'EMPREINTE POUR IMPLANTS AVEC CUPULE D'EMPREINTE

(30) Priorität: 08.02.1996 CH 32796
(43) Veröffentlichungstag der Anmeldung: 25.11.1998
(73) Patentinhaber: Institut Straumann AG, 4437 Waldenburg (CH)
(72) Erfinder: SUTTER, Franz, CH-4435 Niederdorf (CH); BAUMGARTNER, Reto, CH-4402 Frenkendorf (CH)
(74) Vertreter: Ullrich, Gerhard, Dr.
(86) Internationale Anmeldenummer: CH9700032
(87) Internationale Veröffentlichungsnummer: WO9728756

(56) Entgegenhaltungen:
- DE-A- 4 415 670
- SCHROEDER, SUTTER, BUSER, KREKELER: "ORALE IMPLANTOLOGIE" 1994 , 2. AUFL. THIEME VERLAG , STUTTGART, DE XP002012099 in der Anmeldung erwähnt siehe Seite 202 - Seite 209

## Beschreibung

### Anwendungsgebiet der Erfindung

Die vorliegende Erfindung betrifft ein Abdrucksystem mit einer Abdruckkappe für ein in den menschlichen Körper eingesetztes Implantat zur Übertragung des aus der Gewebestruktur austretenden Implantatabschlusses, inklusive möglicher Aufbauten auf diesem Implantatabschluss, auf ein Meistermodell.

### Stand der Technik

Die folgende Erörterung bezieht sich zunächst beispielshaft auf Dentalimplantate. Bisher benutzt man zur Abformung der Situation im Mund des Patienten und zur Übertragung des gewonnenen Abdrucks auf ein Meistermodell - auf diesem wird dann der Zahnersatz modelliert - eine Reihe von Elementen. Die bis dato durchzuführenden Arbeitsschritte und dabej. benutzten Elemente sind eingehend dargestellt bei SCHROEDER, A.; SUTTER, F.; BUSER, D.; KREKELER, G.: Orale Implantologie. Georg Thieme Verlag Stuttgart, 2. Aufl. 1994, S. 202 ff. Einerseits ist das Zusammensetzen der Elemente im Mund des Patienten, insbesondere im Bereich der Molaren - wegen der sich ergebenden Gesamthöhe der Elemente - problematisch, zumal wenn noch ein Schraubinstrument benutzt werden muss. Des weiteren sind die Arbeitsablaufe für den Patienten anstrengend sowie bei der Abdrucknahme und der Meistermodellherstellung zeitaufwendig. Überdies stellen sich Ungenauigkeiten ein.

Die Schwierigkeiten ergeben sich vorrangig dadurch, dass man bei bestimmten Aufbauteilen für die Abdrucknahme keine Abdruckkappe verwenden kann oder die Abdruckkappe mit einer axial positionierten, durch den Abdrucklöffel hindurchgehenden Schraube fixiert werden muss. Diese Fixierung geschieht bei der Abdrucknahme am im Implantat eingeschraubten Aufbauteil, wobei das Implantat im Mund des Patienten eingesetzt ist. Bei der nachfolgenden Herstellung des Meistermodells erfolgt die Fixierung an dem dabei verwendeten Manipulierimplantat.

Aus der DE 44 15 670 A1 ist eine Abdruckkappe bekannt, die am offenen, zum Implantat gerichteten Ende, federnde Laschen aufweist, welche im aufgesteckten Zustand über die Schulter des konischen Aufbauteils greifen. Diese Abdruckkappe ist nur für Aufbauteile verwendbar, die eine zu hintergreifende Kontur aufweisen, an der sich die Laschen verkrallen können. Ferner ist es mit dieser Abdruckkappe nur möglich, ein durch die Gingiva ragendes Aufbauteil abzuformen; für die Abformung der Implantatschulter wurde diese Abdruckkappe nicht konzipiert.

### Aufgabe der Erfindung

Angesichts der bisher aufwendigen und teils ungenauen Abdrucknahme und Meistermodellherstellung sowie der nur bedingt verwendbaren Abdruckkappen liegt der Erfindung das folgende Problem zugrunde. Es ist ein Abdrucksystem mit einer Abdruckkappe zu schaffen, die sich auf der Schulter des eingesetzten Implantats bzw. des Manipulierimplantats zumindest partiell abstützt und für den Abdruck in stabiler Position verbleibt. Ferner muss das Abdrucksystem für die verschiedensten Typen von Aufbauteilen verwendbar sein, nämlich für gerade oder abgewinkelte, konische oder einen Vielkantkopf aufweisende, massive oder mit Innengewinde versehene Aufbauteile. Die zu konzipierende Abdruckkappe muss, eingebettet in der im Abdrucklöffel vorhandenen Abdruckmasse, vom eingesetzten Implantat abziehbar sein und ein fallweise für die Herstellung des Meistermodells einzusetzendes Manipulierimplantat ebenso positionsgesichert aufnehmen können.

### Wesen der Erfindung

Das Abdrucksystem beinhaltet eine Abdruckkappe zur Übertragung eines aus einer menschlichen Gewebestruktur austretenden Abschlusses eines in den Humankörper eingesetzten Implantats, inklusive möglicher Aufbauten auf ein Meistermodell. Zuoberst schliesst das Implantat am Implantatkopf mit einer Implantatschulter ab, wobei in den Implantatkopf Aufbauteile mit verschiedenen, die Implantatschulter überragenden Pfeilern einsetzbar sind. Die Abdruckkappe schliesst zuunterst mit einer zur Implantatschulter komplementären Kappenschulter ab, die zumindest radial partiell auf der Implantatschulter aufsetzt.

In das Innere der Abdruckkappe ist eine Schieberhülse eingesetzt, welche die relative Lage der Aussenflanke des Pfeilers eines Aufbauteils im Verhältnis zur Implantatschulter erfasst, um die im gewonnenen Abdruck fixierte Originalsituation analog auf das Meistermodell zu übertragen. Für die Herstellung des Meistermodells ist, basierend auf dem zuvor von der Originalsituation genommenen Abdruck, ein Manipulierimplantat mit einer zur Kappenschulter komplementären Manipulierschulter und einem zum Pfeiler des Aufbauteils entsprechenden Manipulierpfeiler vorgesehen. Die Kappenschulter liegt an der Manipulierschulter an und die in der Abdruckkappe positionierte Schieberhülse bestimmt die relative Lage der Aussenflanke des Manipulierpfeilers. Das Manipulierimplantat besitzt einen der jeweiligen Originalsituation in seinen Aussenkonturen analogen Manipulierpfeiler, der bei der Herstellung des Meistermodells den Raum des zuvor am Patienten abgeformten, auf dem Implantat befindlichen Pfeilers, im Abdruck einnimmt.

Die Schieberhülse besteht vorteilhaft aus einem zwischen die Abdruckkappe und den Pfeiler passenden Hülsenstück und einem aus der Abdruckkappe herausragendenden Kragen. Das Hülsenstück ist in die Abdruckkappe einschiebbar und besitzt einen angesetzten Klemmkopf, der dazu bestimmt ist, in die axiale Innengewindebohrung im Implantat oder in die Axialbohrung im Manipulierimplantat klemmend einzugreifen. Die Schieberhülse ist oben offen, und zum Verklemmen der Schieberhülse ist ein von oben einschiebbarer Sicherungszapfen mit einem in die Schieberhülse ragenden Schaft vorgesehen.

In einer speziellen Ausgestaltung weist der Sicherungszapfen zuoberst einen aus der Abdruckkappe herausragenden Teller auf, und am Schaft ist eine die Klemmwirkung erhöhende Wulst vorgesehen. Die Schieberhülse und die Abdruckkappe werden transversal von einer Schraube durchdrungen, deren Spitze am Pfeiler des Aufbauteils bzw. am Manipulierpfeiler des Manipulierimplantats eingreift, so dass die Anordnung fixiert ist.

Dank der Erfindung steht nun ein Abdrucksystem mit einer Abdruckkappe zur Verfügung, mit welchem die Abdrucknahme im Mund des Patienten sowie die Meistermodellherstellung sehr vereinfacht wird. Zudem ist nun die Übertragung der realen Situation auf das Meistermodell präziser. Mit dem Abdrucksystem wird es ermöglicht, die relative Höhenlage sowie die Drehstellung - bei Vorhandensein einer Bezugskontur - des in das Implantat eingesetzten Pfeilers zu ermitteln und vom Abdruck auf das Meistermodell zu übertragen.

### Kurzbeschreibung der beigefügten Zeichnungen

- Figur 1A:: ein Implantat mit einem Konus-Massivaufbauteil, einer Abdruckkappe, einer Schieberhülse und einem Sicherungszapfen;
- Figur 1B:: die Darstellung gemäss Figur 1A mit dem aufgedrückten Abdrucklöffel;

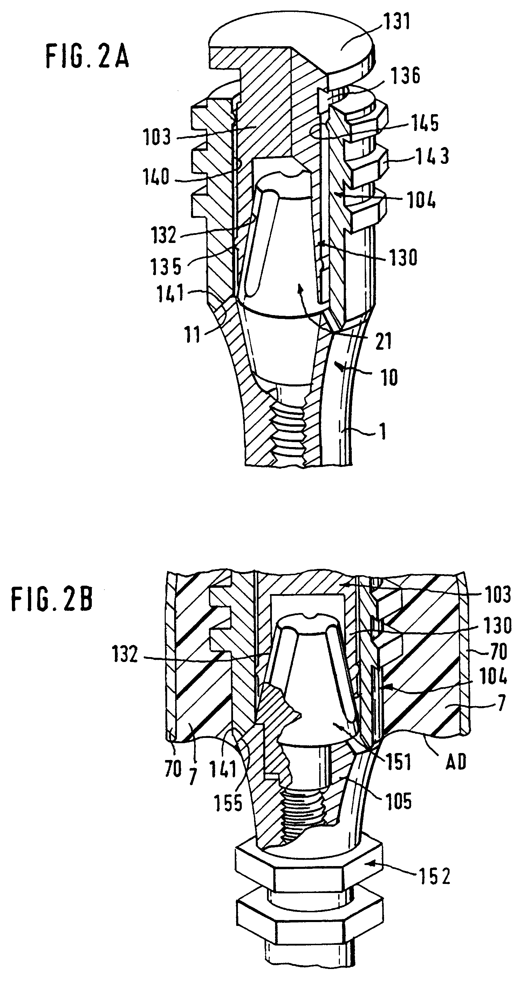

- Figur 2A:: ein Implantat mit einem Konus-Massivaufbauteil, einer Abdruckkappe und einer Schieberhülse;
- Figur 2B:: die Darstellung gemäss Figur 2A mit dem aufgedrückten Abdrucklöffel;

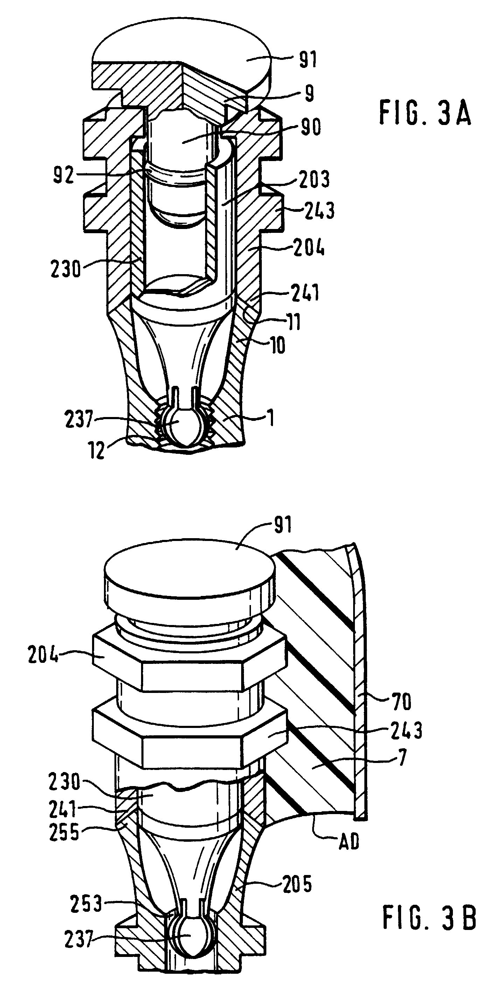

- Figur 3A:: ein Implantat ohne Aufbauteil, aber mit einer Schieberhülse und einem Sicherungszapfen;
- Figur 3B:: die Darstellung gemäss Figur 3A mit dem aufgedrückten Abdrucklöffel;
- Figur 4A:: ein Implantat mit einem abgewinkelten Konus-Massivaufbauteil, einer Abdruckkappe und einer transversal gesicherten Schieberhülse;

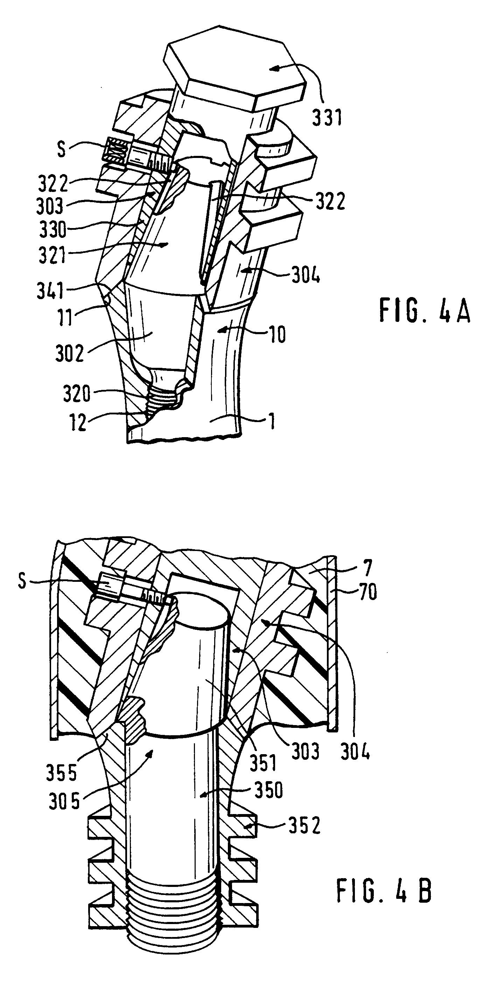

- Figur 4B:: die Darstellung gemäss Figur 4A mit dem aufgedrückten Abdrucklöffel und

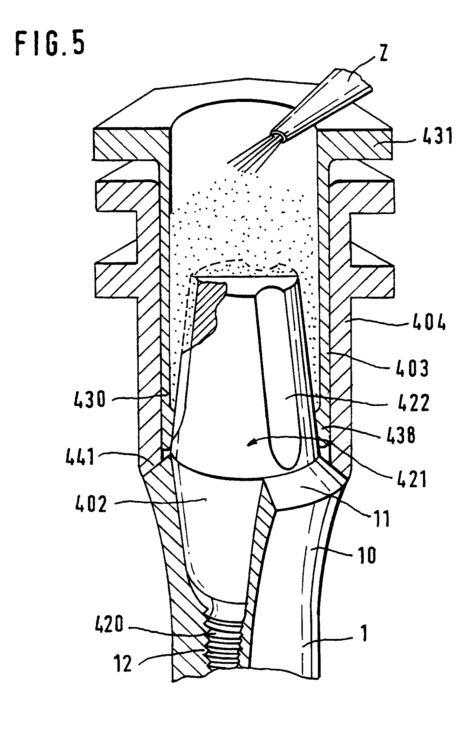

- Figur 5;: ein Implantat mit einem beschliffenen Konus-Massivaufbauteil, einer Abdruckkappe und einer Schieberhülse bei der Einleitung von Abdruckmasse.

### Ausführungsbeispiele

Anhand der beiliegenden Zeichnungen erfolgt nachstehend die detaillierte Beschreibung von Ausführungsbeispielen des erfindungsgemässen Abdrucksystems.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 1A

Ohne die Erfindung darauf beschränken zu wollen, bezieht sich das Beispiel weiterhin auf die Abdrucknahme an einem im Mund des Patienten eingesetzten Implantats **1**, also ein Dentalimplantat. Das Implantat **1** besitzt einen sich konisch aufwärts erweiternden Implantatkopf **10** sowie eine sich aufwärts konisch verengende Implantatschulter **11**. In das Implantat **1** ist ein Aufbauteil - hier ein gerades Konus-Massivaufbauteil **2** - mit seinem Gewindeteil **20** in die Innengewindebohrung **12** des Implantats **1** eingeschraubt. Der die Implantatschulter **11** überragende Pfeiler **21** des Konus-Massivaufbauteils **2** weist äusserlich mehrere vertikal verlaufende Nuten **22** auf. Insoweit sind die Teile an sich bekannt.

Zur Abdrucknahme wird eine Schieberhülse **3** benutzt, die sich in ein beiderseits offenes Hülsenstück **30** und einen oben abschliessenden, flanschartigen, offenen Kragen **31** gliedert. Das zylindrische Hülsenstück **30** ist aussen glatt, während es eine zum Pfeiler **21** komplementäre Innenkontur **32** aufweist, auf diesen aufschiebbar ist und nach unten hin - dem sich erweiternden Konus-Massivaufbauteil **2** angepasst - dünnwandiger wird. Etwa in Höhe der Oberkante des Konus-Massivaufbauteils **2** kann die Schieberhülse **3** äusserlich eine radial umlaufende Nut **33** aufweisen. Innnerlich kann die Schieberhülse **3** im Bereich des Kragens **31** eine radial umlaufende, bandförmige Erweiterung **34** besitzen.

Die Abdruckkappe **4** ist im Prinzip zylindrisch und beiderseits offen. Der durch die Abdruckkappe **4** verlaufende Durchgangskanal **40** ist zur Aussenform des Hülsenstücks **30** abgesehen von der Nut **33** - komplementär, so dass die Abdruckkappe **4** über die Schieberhülse **3** gleitend geschoben werden kann. Zuunterst besitzt die Abdruckkappe **4** eine Kappenschulter **41**, die zur Implantatschulter **11** komplementär ist. Am äusseren Umfang ist die Abdruckkappe **4** radial gefurcht, so dass mehrere Retentionsteller **43** entstehen.

Im zusammengefügten Zustand reicht die auf den Pfeiler **21** aufgeschobene Schieberhülse **3** mit dem Hülsenstück **30** bis fast zur Implantatschulter **11.** Die Abdruckkappe **4** nimmt in ihrem Durchgangskanal **40** das Hülsenstück **30** auf, wobei der Kragen **31** aus der Abdruckkappe **4** oben herausragt. Die Innenkontur **32** der Schieberhülse **3** schmiegt sich an die Aussenkontur des Pfeilers **21.** Insbesondere der untere Auslauf des Hülsenstücks **30** wirkt als verklemmender Keil zwischen dem Pfeiler **21** und der Abdruckkappe **4.** Die Kappenschulter **41** sitzt praktisch fugenlos auf der Implantatschulter **11.**

In die oben offene Schieberhülse **3** ist ein Sicherungszapfen **9** mit seinem Schaft **90** eingesetzt. Oben schliesst der Sicherungszapfen **9** mit einem Teller **91** ab, welcher auf der Oberseite des Kragens **31** aufsetzt. Im unteren Bereich besitzt der Schaft **90** eine radial umlaufende Wulst **92,** die im eingesteckten Zustand über die Erweiterung **34** hinaus geglitten ist und ein Verklemmen zwischen der Schieberhülse **3** und der Innenwandung der Abdruckkappe **4** herbeiführt. Durch dieses Verklemmen und das mit seinem unteren Ausläufer als Keil wirkenden Hülsenstück **30** wird ein für die Abdrucknahme ausreichend fester Sitz der Abdruckkappe **4** auf dem im Mund des Patienten befindlichen Implantat **1** erreicht.

### Figur 1B

Diese Figur gehört zur Herstellung des Meistermodells, nachdem man den Abdruck **AD** der Mundsituation mit einem mit Abdruckmasse **7** gefüllten Abdrucklöffel **70** gewonnen hat. Vorhanden sind wiederum die zuvor beschriebene Schieberhülse **3,** die Abdruckkappe **4** und der Sicherungszapfen **9,** welche alle im Abdruck **AD** eingebettet bleiben. Bei dieser Arbeitsphase kommt ein Manipulierimplantat **5** - hier mit einem konischen Pfeiler **51** - hinzu, wobei der Pfeiler **51** dem Pfeiler **21** analog ist. Das Manipulierimplantat **5** wird mit dem Pfeiler **51** in den Abdruck **AD** eingeschoben. Die Kappenschulter **41** kommt mit der komplementären Manipulierschulter **55** des Manipulierimplantats **5** zusammen. Das gesamte Manipulierimplantat **5** wird so eingeschoben durch die zuvor beschriebene Verklemmung im Abdruck **AD** gehalten. Nun drückt der Ausläufer des Hülsenstücks **30** gegen den Konuspfeiler **51.** Das Manipulierimplantat **5** besitzt unten einen Fortsatz mit mehreren Retentionstellern **52.** Zur Herstellung des Meistermodells wird an den Abdruck **AD** Modellmasse angegossen.

### Figur 2A

Vorhanden sind wiederum das Implantat **1** und das Konus-Massivaufbauteil **2.** Abgewandelt sind die Schieberhülse **103** sowie die Abdruckkappe **104,** wobei ein Sicherungszapfen, dessen Funktion die Schieberhülse **103** mit übernimmt, hier entfällt. Die Schieberhülse **103** ist oben nicht offen, sondern endet mit einem geschlossenen Kragen **131.** Nach unten erstreckt sich das Hülsenstück **130** mit der zum Pfeiler **21** komplementären Innenkontur **132**. Im unteren Bereich des Hülsenstücks **130** sind äusserlich, radial umlaufende Wülste **135** vorgesehen, welche das Verklemmen an der Abdruckkappe **104** begünstigen. Unterhalb des Kragens **131** besitzt die Schieberhülse **103** am Übergang zum Hülsenstück **130** eine äusserliche, radiale Nut **136.**

Die Abdruckkappe **104** besitzt nahe dem oberen Abschluss eine innen umlaufende Wulst **145**; dies ebenfalls zur Verbesserung der Klemmwirkung. Auch diese Abdruckkappe **104** weist einen axialen Durchgangskanal **140**, eine Kappenschulter **141** sowie Retentionsteller **143** auf. Die mit ihrer Kappenschulter **141** auf der Implantatschulter **11** aufsitzende Abdruckkappe **104** wird wiederum durch die klemmende Keilwirkung des unteren, sich verjüngenden Auslaufs des Hülsenstücks **130** in stabiler Position für die Abdrucknahme gehalten.

### Figur 2B

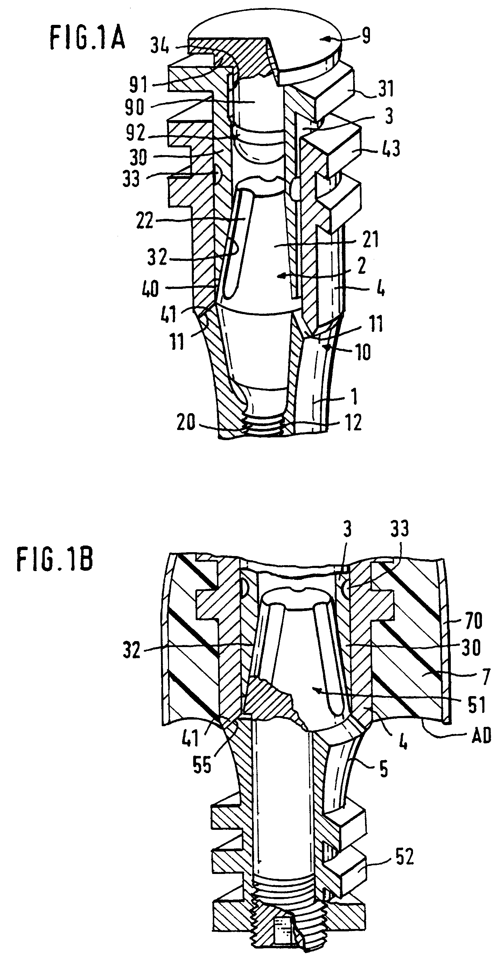

In Analogie zur Figur 1B ist auch hier der Abdruck **AD** mit dem Abdrucklöffel **70** und der Abdruckmasse **7** vorhanden, in der die Abdruckkappe **104** sowie darin die Schieberhülse **103** eingebettet sind. Zur Herstellung des Meistermodells wird in den Abdruck **AD,** gegen die Kappenschulter **141** - daran stösst die Manipulierschulter **155** an -, wieder ein Manipulierimplantat **105** geschoben. Das Manipulierimplantat **105** ist hier nicht einstückig, sondern der Pfeiler **151** - in seiner Aussenkontur identisch zum Pfeiler **21** - ist in den Fortsatz eingeschraubt, der äussere Retentionsteller **152** aufweist.

### Figuren 3A und 3B

Hier sind das Implantat **1** mit der Implantatschulter **11** und die mit ihrer Kappenschulter **241** darauf aufsitzende Abdruckkappe **204** vorhanden. Äusserlich weist die Abdruckkappe **204** Retentionsteller **243** auf. Ebenfalls eingesetzt wird ein sicherungszapfen **9** mit dem Schaft **90**, dem Teller **91** und der Wulst **92**. Die Besonderheit besteht nun in der speziellen Schieberhülse **203**, an deren abwärtsweisenden Hülsenstück **230** ein elastischer Klemmkopf **237** ansetzt, welcher in die Innengewindebohrung **12** im Implantat **1** einrastet. In das oben offene Hülsenstück **230** ist der Schaft **90** mit der Wulst **92** eingedrückt und bewirkt zusammen mit dem eingerasteten Klemmkopf **237** ein Verklemmen des ganzen Aufbaus. Die Abdrucknahme erfolgt hier unabhängig von einem vorhandenen Aufbauteil - dieses ist entfernt worden bzw. noch nicht eingesetzt.

Für die Meistermodellherstellung giesst man wieder Modellmasse an den mit dem Abdrucklöffel **70** und der Abdruckmasse **7** gewonnenen Abdruck **AD**, in den ein oben offenes Manipulierimplantat **205** eingeschoben wird, so dass der Klemmkopf **237** in eine im Manipulierimplantat **205** vorgesehene Axialbohrung **253** eingreift. Die Kappenschulter **241** sitzt auf der Manipulierschulter **255** auf.

### Figuren 4A und 4B

In diesem Ausführungsbeispiel kommt ein Konus-Massivaufbauteil **302** mit Nuten **322** und einem abgewinkelten Pfeiler **321** zum Einsatz, welcher unbeschliffen ist. Das Gewindeteil **320** greift in die Innengewindebohrung **12** im Implantat **1** ein. Entsprechend der Schräglage des Pfeilers **321** wird eine Abdruckkappe **304** mit elliptischer Kappenschulter **341** verwendet, welche fugenlos auf der Implantatschulter **11** aufsitzt. Durch die Schräglage des Pfeilers **321** benötigt man eine nichtrotationssymmetrische Schieberhülse **303**, deren Hülsenstück **330** eine asymmetrische Dicke aufweist, um eine gleichmässige Klemmung zu bewirken. Nach oben schliesst die Schieberhülse **303** mit einem geschlossenen Kragen **331** ab. Zur zusätzlichen Sicherung dieses Aufbaus ist eine durch die Abdruckkappe **304** und das Hülsenstück **330** transversal eingreifende Schraube **S** vorgesehen, deren Spitze in eine Nut **322** am Pfeiler **321** eindringt.

In diesem Zusammenbau wird mit dem mit Abdruckmasse **7** gefüllten Abdrucklöffel **70** der Abdruck **AD** genommen und dann zur Meistermodellherstellung ein adäquates Manipulierimplantat **305** mit zum Pfeiler **321** komplementären Konuspfeiler **351** in den Abdruck **AD** eingeschoben. Die Kappenschulter **341** und die Manipulierschulter **355** stossen aufeinander. Die Schraube **S** stützt sich nun am Pfeiler **351** ab. Das Manipulierimplantat **305** besitzt analog den Fortsatz **350** mit den Retentionstellern **352**.

### Figur 5

Bei einem Konus-Massivaufbauteil **402** mit geradem, aber beschliffenem Pfeiler **421**, dem Gewindeteil **420** und den Nuten **422** benutzt man zur Abdrucknahme eine gerade Abdruckkappe **404** mit dem Durchgangskanal **430**, der Kappenschulter **441** sowie den Retentionstellern. Ferner kommt eine dünnwandige Schieberhülse **403** mit bis nahe an die Implantatschulter **11** reichendem Hülsenstück **430** zum Einsatz. Am unteren Auslauf besitzt das Hülsenstück **430** einen verdickten Abschlussrand **438** zur Verklemmung zwischen der Abdruckkappe **404** und dem Pfeiler **421**. Der verbleibende Hohlraum innerhalb der oben offenen Schieberhülse **403** wird über eine eingeführte Zuführleitung **Z** mit Abdruckmasse **7** aufgefüllt. Nach dem Aushärten der Abdruckmasse **7** kann die Abdruckkappe **404**, deren Kappenschulter **441** auf der Implantatschulter **11** aufsitzt, abgezogen werden, und man erhält zunächst ein genaues Negativabbild der unregelmässigen Aussenkontur des Pfeilers **421**, welches dann der Herstellung des Meistermodells dient.

Prinzipiell ist das zuvor beschriebene Abdrucksystem nicht nur im Dentalbereich, sondern auch für in anderen Partien des menschlichen Körpers eingesetzte Implantate anwendbar.

## Patentansprüche

1. Abdrucksystem mit einer Abdruckkappe (**4,104,204, 304,404**) zur Übertragung eines aus einer menschlichen Gewebestruktur austretenden Abschlusses eines in den Humankörper eingesetzten Implantats (**1**), inklusive möglicher Aufbauten - nachstehend als Situation (**X**) bezeichnet -, auf ein Meistermodell, wobei
a) das Implantat (**1**) am Implantatkopf (**10**) zuoberst mit einer Implantatschulter (**11**) abschliesst und
b) in den Implantatkopf (**10**) Aufbauteile (**2,302,402**) mit verschiedenen, die Implantatschulter (**11**) überragenden Pfeilern (**21,321,421**) einsetzbar sind, dadurch gekennzeichnet, dass
c) die Abdruckkappe (**4,104,204,304,404**) zuunterst mit einer zur Implantatschulter (**11**) komplementären Kappenschulter (**41,141,241,341,441**) abschliesst und zumindest radial partiell auf der Implantatschulter (**11**) aufsetzt, und daß
d) in das Innere der Abdruckkappe (**4,104,204,304,404**) eine Schieberhülse (**3,103,203,303,403**) eingesetzt ist, welche die relative Lage der Aussenflanke des Pfeilers (**21,321, 421**) im Verhältnis zur Implantatschulter (**11**) erfasst, um die im gewonnenen Abdruck (**AD**) fixierte Situation (**X**) analog auf das Meistermodell zu übertragen.

2. Abdrucksystem nach Anspruch 1, dadurch gekennzeichnet, dass
a) für die Herstellung des Meistermodells - basierend auf dem zuvor von der Situation (**X**) genommenen Abdruck (**AD**) - ein Manipulierimplantat (**5,105,205,305**) mit einer zur Kappenschulter (**41,141,241,341**) komplementären Manipulierschulter (**55,155,255,355**) und einem zum Pfeiler (**21,321,421**) entsprechenden Manipulierpfeiler (**51,151, 351**) vorgesehen ist und
b) die Kappenschulter (**41,141,241,341**) an der Manipulierschulter (**55,155,255,355**) anliegt und
c) die in der Abdruckkappe (**4,104,204,304**) positionierte Schieberhülse (**3,103,203,303**) die relative Lage der Aussenflanke des Manipulierpfeilers (**51,151,351**) bestimmt.

3. Abdrucksystem nach Anspruch 2, dadurch gekennzeichnet, dass das Manipulierimplantat (**5,105,305**) einen der jeweiligen Situation (**X**) in seinen Aussenkonturen analogen Manipulierpfeiler (**51,151,351**) aufweist, der bei der Herstellung des Meistermodells den Raum des zuvor am Patienten abgeformten, auf dem Implantat (**1**) befindlichen Pfeilers (**21,321,421**), im Abdruck (**AD**) einnimmt.

4. Abdrucksystem nach Anspruch 1, dadurch gekennzeichnet, dass die Schieberhülse (**3,103,303, 403**) aus einem zwischen die Abdruckkappe (**4,104,304,404**) und den Pfeiler (**21,321,421**) passenden Hülsenstück (**30,130, 330,430**) und einem aus der Abdruckkappe (**4,104,304,404**) herausragendenden Kragen (**31,131,331,431**) besteht.

5. Abdrucksystem nach Anspruch 1, dadurch gekennzeichnet, dass die Schieberhülse (**203**) aus einem in die Abdruckkappe (**204**) einschiebbaren Hülsenstück (**230**) und einem daran angesetzten Klemmkopf (**237**) besteht, der dazu bestimmt ist, in die axiale Innengewindebohrung (**12**) im Implantat (**1**) oder in die Axialbohrung (**253**) im Manipulierimplantat (**205**) klemmend einzugreifen.

6. Abdrucksystem nach Anspruch 1, dadurch gekennzeichnet, dass die Schieberhülse (**3, 203**) oben offen ist und zum Verklemmen der Schieberhülse (**3,203**) ein von oben einschiebbarer Sicherungszapfen (**9**) mit einem in die Schieberhülse (**3,203**) ragenden Schaft (**90**) vorgesehen ist.

7. Abdrucksystem nach Anspruch 6, dadurch gekennzeichnet, dass der Sicherungszapfen (**9**) zuoberst einen aus der Abdruckkappe (**4,204**) herausragenden Teller (**91**) aufweist und am Schaft (**90**) eine die Klemmwirkung erhöhende Wulst (**92**) vorgesehen ist.

8. Abdrucksystem nach Anspruch 1, dadurch gekennzeichnet, dass die Schieberhülse (**303**) und die Abdruckkappe (**304**) von einer Schraube (**S**) durchdrungen werden, deren Spitze am Pfeiler (**321**) des Aufbauteils (**302**) bzw. am Manipulierpfeiler (**351**) des Manipulierimplantats (**305**) eingreift, so dass die Anordnung fixiert ist.

## Claims

1. Impression system with an impression cap (**4,104,204,304,404**) for transferring, to a master cast, an end, protruding from a human tissue structure, of an implant (**1**) which is fitted into the human body, including possible superstructures, hereinafter referred to as situation (**X**), where
a) at the very top, the implant (**1**) ends with an implant shoulder (**11**) on the implant head (**10**), and
b) superstructures (**2,302,402**) with different abutments (**21,321,421**) projecting above the implant shoulder (**11**) can be fitted into the implant head (**10**), characterized in that
c) at the very bottom, the impression cap (**4,104,204,304,404**) ends with a cap shoulder (**41,141,241,341,441**) which is complementary to the implant shoulder (**11**) and which sits radially at least partially on the implant shoulder (**11**), and that
d) a slide sleeve (**3,103,203,303,403**) is fitted into the inside of the impression cap (**4,104,204,304,404**) and determines the relative position of the outside flank of the abutment (**21,321,421**) in relation to the implant shoulder (**11**), in order to transfer the situation (**X**) fixed in the obtained impression (**AD**) analogously to the master cast.

2. Impression system according to Claim 1, characterized in that
a) for producing the master cast, based on the impression (**AD**) taken previously from the situation (**X**), a manipulation implant (**5,105,205,305**) is provided which has a manipulation shoulder (**55,155,255,355**) complementary to the cap shoulder (**41,141,241,341**) and a manipulation abutment (**51,151,351**) corresponding to the abutment (**21,321,421**), and
b) the cap shoulder (**41,141,241,341**) bears on the manipulation shoulder (**55, 155,255,355**), and
c) the slide sleeve (**3,103,203,303**) positioned in the impression cap (**4,104,204,304**) defines the relative position of the outside flank of the manipulation abutment (**51,151,351**).

3. Impression system according to Claim 2, characterized in that the manipulation implant (**5,105,305**) has a manipulation abutment (**51,151,351**) analogous in its outer contours to the respective situation (**X**), which manipulation abutment (**51,151,351**), during the production of the master cast, takes up, within the impression (**AD**), the space of the abutment (**21,321,421**) which is situated on the implant (**1**) and of which an impression has previously been taken.

4. Impression system according to Claim 1, characterized in that the slide sleeve (**3,103,303,403**) consists of a sleeve section (**30,130,330,430**) fitting between the impression cap (**4,104,304,404**) and the abutment (**21,321,421**), and of a collar (**31,131,331,431**) projecting from the impression cap (**4,104,304,404**).

5. Impression system according to Claim 1, characterized in that the slide sleeve (**203**) consists of a sleeve section (**230**) which can be pushed into the impression cap (**204**), and of a clamping head (**237**) which is attached thereon and which is intended to engage with clamping in the axial internal threaded bore (**12**) of the implant (**1**) or in the axial bore (**253**) of the manipulation implant (**205**).

6. Impression system according to Claim 1, characterized in that the slide sleeve (**3,203**) is open at the top, and in order to clamp the slide sleeve (**3,203**), a securing peg (**9**) is provided which can be pushed in from above and which has a shaft (**90**) projecting into the slide sleeve (**3,203**).

7. Impression system according to Claim 6, characterized in that the securing peg (**9**) has, at the very top, a plate (**91**) projecting from the impression cap (**4,204**), and a bead (**92**) increasing the clamping action is provided on the shaft (**90**).

8. Impression system according to Claim 1, characterized in that a screw (**S**) passes through the slide sleeve (**303**) and the impression cap (**304**), the point of the screw (**S**) engaging on the abutment (**321**) of the superstructure (**302**) or on the manipulation abutment (**351**) of the manipulation implant (**305**), so that the arrangement is fixed.

## Revendications

1. Système de prise d'empreinte avec une coiffe de prise d'empreinte (4, 104, 204, 304, 404) pour le transfert d'une terminaison, sortant d'une structure tissulaire humaine, d'un implant (1) posé dans le corps humain, y compris d'éventuelles pièces ajoutées - appelée situation (X) dans la suite - à un maître-modèle, dans lequel
a) l'implant (1) se termine à la tête de l'implant (10) à son extrémité supérieure par un épaulement d'implant (11) et
b) des noyaux de montage (2, 302, 402) avec des piliers (21, 321, 421) différents dépassant l'épaulement d'implant (11) peuvent être introduits dans la tête de l'implant (10),
caractérisé en ce que
c) la coiffe de prise d'empreinte (4, 104, 204, 304, 404) se termine à son extrémité inférieure par un épaulement de coiffe (41, 141, 241, 341, 441) complémentaire à l'épaulement d'implant (11) et s'applique au moins en partie radialement sur l'épaulement d'implant (11), et en ce que
d) à l'intérieur de la coiffe de prise d'empreinte (4, 104, 204, 304, 404) est introduite une douille coulissante (3, 103, 203, 303, 403), qui détermine la position relative des flancs extérieurs du pilier (21, 321, 421) par rapport à l'épaulement d'implant (11), afin de transférer de façon analogue au maître-modèle la situation (X) fixée dans l'empreinte obtenue (AD).

2. Système de prise d'empreinte suivant la revendication 1, caractérisé en ce que
a) pour la confection du maître-modèle - en se basant sur l'empreinte (AD) prise antérieurement de la situation (X) - il est prévu un analogue de laboratoire (5, 105, 205, 305) avec un épaulement d'analogue (55, 155, 255, 355) complémentaire à l'épaulement de coiffe (41, 141, 241, 341) et un analogue de pilier (51, 151, 351) correspondant au pilier (21, 321, 421), et
b) l'épaulement de coiffe (41, 141, 241, 341) s'applique sur l'épaulement d'analogue (55, 155, 255, 355), et
c) la douille coulissante (3, 103, 203, 303) positionnée dans la coiffe de prise d'empreinte (4, 104, 204, 304) détermine la position relative des flancs extérieurs de l'analogue de pilier (51, 151, 351).

3. Système de prise d'empreinte suivant la revendication 2, caractérisé en ce que l'analogue de laboratoire (5, 105, 305) présente un analogue de pilier (51, 151, 351) analogue par ses contours extérieurs à la situation (X) respective, et qui, lors de la confection du maître-modèle, occupe dans l'empreinte (AD) l'espace du pilier (21, 321, 421) se trouvant sur l'implant (1) et copié antérieurement sur le patient.

4. Système de prise d'empreinte suivant la revendication 1, caractérisé en ce que la douille coulissante (3, 103, 303, 403) se compose d'une partie de douille (30, 130, 330, 430) s'ajustant entre la coiffe de prise d'empreinte (4, 104, 304, 404) et le pilier (21, 321, 421) et d'une collerette (31, 131, 331, 431) débordant au-delà de la coiffe de prise d'empreinte (4, 104, 304, 404).

5. Système de prise d'empreinte suivant la revendication 1, caractérisé en ce que la douille coulissante (203) se compose d'une partie de douille (230) à glisser dans la coiffe de prise d'empreinte (204) et d'une tête de serrage (237) attachée à celle-ci, qui est destinée à s'accrocher avec serrage dans le trou axial fileté intérieurement (12) dans l'implant (1) ou dans le trou axial (253) dans l'analogue de laboratoire (205).

6. Système de prise d'empreinte suivant la revendication 1, caractérisé en ce que la douille coulissante (3, 203) est ouverte vers le haut et en ce qu'il est prévu, pour bloquer la douille coulissante (3, 203), une broche de sécurité (9) à insérer par le haut avec une tige (90) pénétrant dans la douille coulissante (3, 203).

7. Système de prise d'empreinte suivant la revendication 6, caractérisé en ce que la broche de sécurité (9) présente à son extrémité supérieure un plateau (91) débordant au-delà de la coiffe de prise d'empreinte (4, 204) et en ce qu'il est prévu sur la tige (90) un bourrelet (92) accentuant l'effet de serrage.

8. Système de prise d'empreinte suivant la revendication 1, caractérisé en ce que la douille coulissante (303) et la coiffe de prise d'empreinte (304) sont traversées par une vis (S), dont la pointe s'accroche au pilier (321) du noyau de montage (302), respectivement à l'analogue de pilier (351) de l'analogue de laboratoire (305), de façon à fixer le dispositif.
